# EUROPEAN PATENT APPLICATION

(11) **EP 2 159 735 A2**
(43) Date of publication of application: **03.03.2010**
(21) Application number: 09158297.3
(22) Date of filing: 20.04.2009
(51) Int. Cl.: G06K 7/10

(54) **Multiple aperture imaging barcode reader**

(30) Priority: 02.09.2008 US 202480
(71) Applicant: NCR Corporation, Dayton, OH 45479-0001 (US)
(72) Inventor: Yepez, Rafael, Sanford, FL 32746 (US); Shearer, Frank, Longwood, FL 32779 (US)
(74) Representative: MacLeod, Roderick William

(57) **Abstract**

A multiple aperture imaging barcode reader (10) which positions a movable mirror (14) to image items (20, 24) at different focal lengths and fields of view. The barcode reader (10) includes a housing (40 with a first aperture (16) and a second aperture (18), a mirror assembly (14) moveable to first and second positions, a camera (12) for capturing a first image of a first item (20) when the mirror assembly (14) is in the first position and the first item (20 is optically aligned with the first aperture (16), and for capturing a second image of a second item (24) when the mirror assembly (14) is in the second position and the second item (24) is optically aligned with the second aperture (18), and a processor (36) for identifying and decoding a first barcode label (22) on the first item (20), and for identifying and decoding a second barcode label (26) on the second item (24).

## Description

Imaging barcode readers capture images of barcode labels. One disadvantage of such readers is difficulty in reading barcode labels on items placed at different distances from the reader.

If the reader is positioned at a relatively close-in distance to read a first type of barcode label on an item, field of view is reduced, making reading of a second type of barcode on another type of item difficult, if not impossible. If the reader is positioned at a greater distance to increase field of view, the first type of barcode label becomes out of focus. Placing the first type of barcode label at a correct focal distance by hand becomes difficult due to hand motion.

It would be desirable to provide a multiple aperture imaging barcode reader.

According to a first aspect of the present invention there is provided a barcode reader comprising: a housing including a first aperture and a second aperture; a mirror assembly moveable to first and second positions; a camera for capturing a first image of a first item when the mirror assembly is in the first position and the first item is optically aligned with the first aperture, and for capturing a second image of a second item when the mirror assembly is in the second position and the second item is optically aligned with the second aperture; and a processor for identifying and decoding a first barcode label on the first item, and for identifying and decoding a second barcode label on the second item.

The barcode may further include an enclosure for the first item adjacent the first aperture including a slot for facilitating insertion of the first item into the enclosure, and an item ejector in the enclosure and coupled to the axle for ejecting the first item from the enclosure when the first item is not subjected to a holding force by an operator.

In one example embodiment, the first item includes a driver's license. In another example embodiment, the first item includes a boarding pass.

An image capture device is also provided. The image capture device includes a mirror moveable to first and second positions, and a camera for capturing a first image of a first item when the mirror is in the first position and captures a second image of a second item when the mirror is in the second position.

According to a second aspect of the present invention there is provided a kiosk comprising: a barcode reader including: a housing including a first aperture and a second aperture, wherein the first aperture faces a generally upwards direction and the second aperture faces a generally downwards direction; a mirror assembly moveable to first and second positions; a camera for capturing a first image of a first item when the mirror assembly is in the first position and the first item is optically aligned with the first aperture, and for capturing a second image of a second item when the mirror assembly is in the second position and the second item is optically aligned with the second aperture; a processor for identifying and decoding a first barcode label on the first item, and for identifying and decoding a second barcode label on the second item; an enclosure for the first item adjacent the first aperture, including a slot for facilitating insertion of the first item into the enclosure and removal of the first item from the enclosure; and a shelf below the barcode reader for supporting the second item below the second aperture.

These and other aspects of the present invention will now be described, by way of example, with reference to the accompanying drawings, in which:

Fig. 1 is a block diagram of an example multiple aperture imaging barcode reader;

Fig. 2 is a top perspective view of the example barcode reader;

Fig. 3 is a bottom perspective view of the example barcode reader;

Fig. 4 is a top perspective view illustrating internal components;

Fig. 5 is a side internal view illustrating a first mode of operation;

Fig. 6 is a side internal view illustrating a second mode of operation; and

Fig. 7 is a kiosk containing the imaging barcode reader.

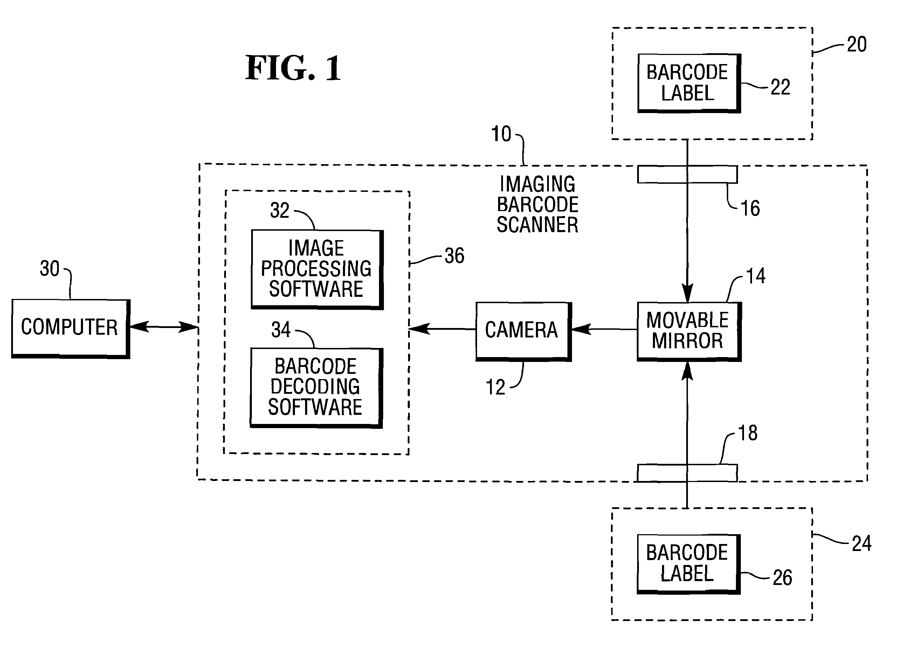

With reference to Fig. 1, an example embodiment of imaging barcode reader 10 includes camera 12 and movable mirror 14.

Camera 12 captures a first image of a first barcode label 22 on a first item 20 through a first window 16 when movable mirror 14 is located in a first position, and captures a second image of a second barcode label 26 on a second item 24 through a second window 18 when movable mirror 14 is located in a second position. Camera 12 may include a charge coupled device (CCD) camera and includes any necessary focusing lenses.

Camera 12 may additionally sense motion of items 20 and 24 for the purpose of initiating capture of images.

Movable mirror 14 may move in any manner to capture images from items 20 and 24. For example, movable mirror 14 may rotate. Additional movable mirrors 14 may also be employed.

The first position of movable mirror 14 is associated with a first field of view or range of fields of view, and a first focal distance or range of focal distances. The second position of movable mirror 14 is associated with a second field of view or range of fields of view, and a second focal distance or range of focal distances.

Items 20 and 24 may be located at different focal distances from camera 12. For example, barcode label 22 may include a two-dimensional barcode label, such as a PDF 417 barcode label, suitable for reading at relatively short focal distances from camera 12. Barcode label 26 may include a high aspect ratio bar code label, such as UPC-128 barcode label, that is suitable for reading at greater focal distances where the field of view of camera 12 is greater.

Camera 12 is coupled to controller 36, which includes a processor and memory for executing image processing software 32 and barcode decoding software 34.

Image processing software 32 identifies portions of image data from camera 12 that contain barcode label information and processes the portions to isolate the barcode label information.

Barcode label decoding software decodes the barcode label information provided by image processing software 32.

Controller 36 sends decoded barcode information to computer 30. Computer 36 may include a transaction computer, such as a point-of-sale (POS) computer, a kiosk, a self-service checkout computer, an automated teller machine, among others, and a general purpose computer, including a computer connected over a global information network, among others.

Imaging barcode reader 10 may be coupled to computer 30 via methods including RS-232 serial, parallel, universal serial bus, Ethernet and/or wireless communications (e.g., 802.11, 802.15, and IR), among others.

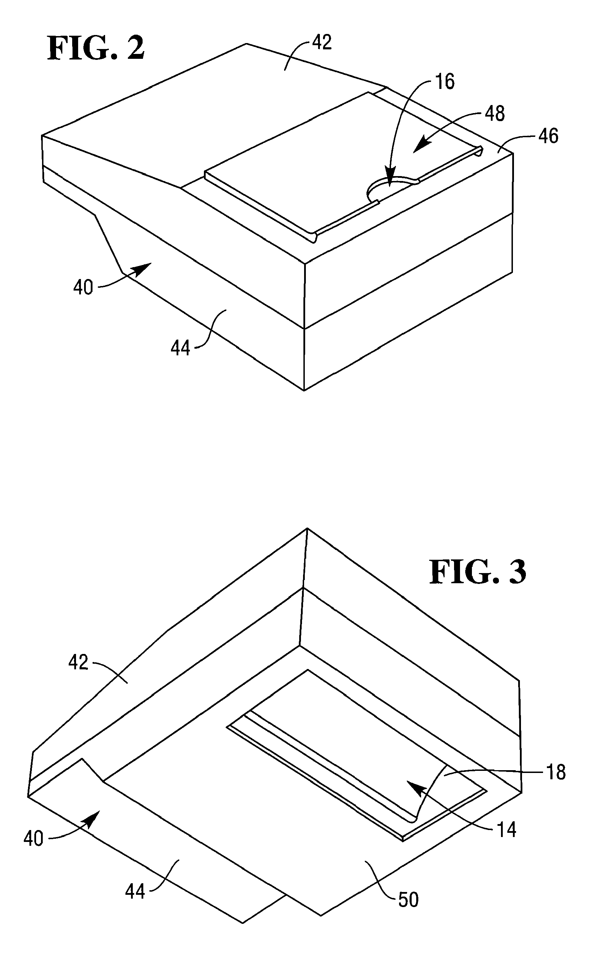

Referring now to Figs. 2-6, an example embodiment of imaging barcode reader 10 includes enclosure 40. Enclosure 40 includes top section 42 and bottom section 44. Enclosure 40 may be opened for servicing by separating top section 42 and bottom section 44.

Top section 42 includes surface 46 containing window 16. Located over window 16 is item enclosure 48, which constrains item 20 to a predetermined focal length for reading barcode label 22. For example, item 20 may include a driver's license and barcode label 22 may include a two-dimensional barcode label, such as PDF 417, Aztec, QR, and Data Matrix type barcode labels, among others. Item enclosure 48 may constrain item 20 to a focal length of about 4.5 inches from camera 12, as measured along centerline 76, which is an optimal distance from camera 12 for reading this type of barcode 22.

Item enclosure 48 is generally planar, is about the same size as window 16, and parallels window 16. Therefore, item enclosure 48 is intended primarily for item 20 which is about the same size as window 16, such as a driver's license. Item enclosure 48 includes aperture 52 for accepting item 20.

Bottom section 44 includes surface 50 containing window 18 for capturing an image of item 24.

Example imaging barcode reader 10 includes two mirrors 14a and 14b mounted on opposite sides of mirror mount 68 with reflective sides facing outwards. Mirror mount 68 includes axle 72 which seats within axle mounts 70, thus allowing mirror mount 68 to rotate about axle mounts 70.

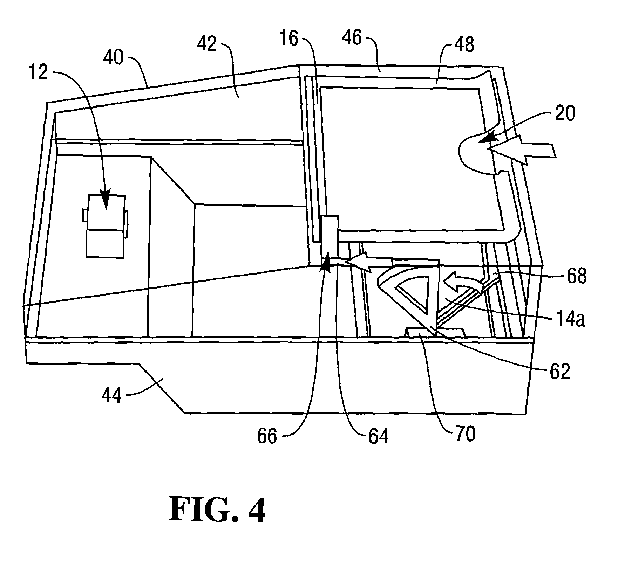

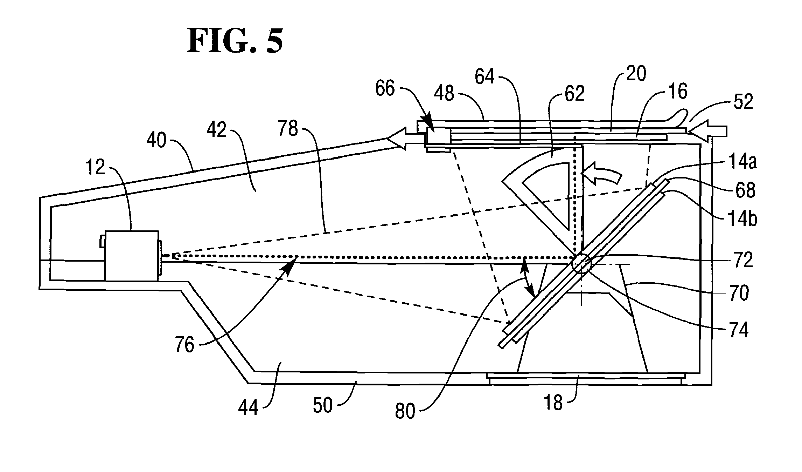

Mirror mount 68 may be rotated manually or automatically. For example, imaging barcode reader 10 may further include pivot arm 62 attached to one end of axle 72, sliding actuator arm 64 coupled to pivot arm 62, and sliding actuator tab 66 coupled to sliding actuator arm 64 within item enclosure 48. As item 20 is progressively inserted into item enclosure 48, item 20 pushes sliding actuator tab 66, thus causing mirror mount 68 and mirror 14a to rotate desired position for capturing an image of item 20 (Figs. 4 and 5). In this position, mirror mount 68 is oriented at angle 80 of approximately 45 degrees counter-clockwise from centerline 76.

While item 20 is in position, camera 12 senses motion of item 20 and initiates image capture. For example, camera 20 may detect a predetermined change in contrast and initiate image capture. Alternatively, an operator may activate camera 12 to capture an image of item 20. As another alternative, the same mechanism which rotates mirror mount 68 may also automatically activate camera 12. For example, sliding actuator tab 66 may engage a switch for automatically activating camera 12 when a driver's license is fully inserted. Other types of activation methods are also envisioned, including a dedicated motion sensor for sensing motion of item 20.

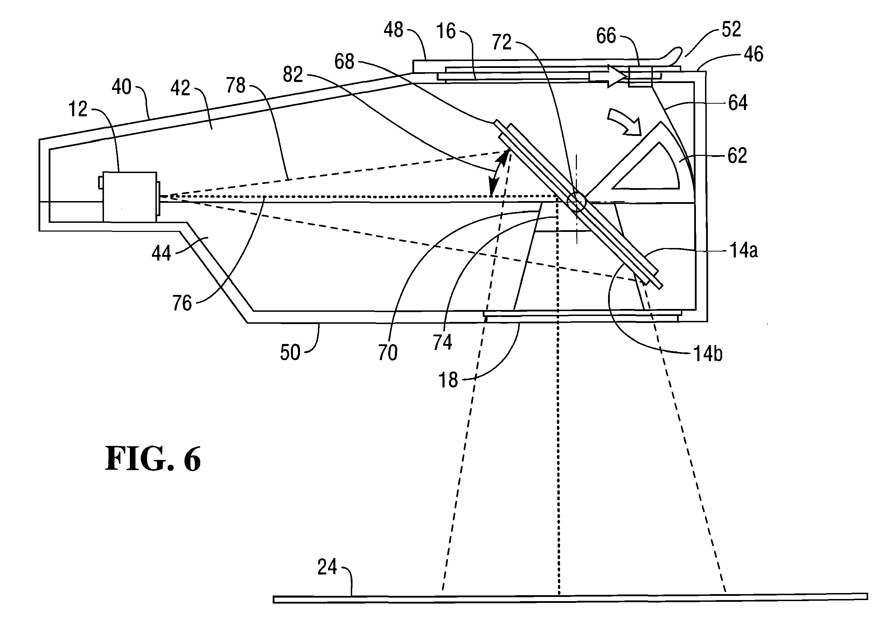

Mirror mount 68 may be rotated manually or automatically to place mirror 14b in a position for capturing an image of item 24. For example, imaging barcode reader 10 may further include spring 74 about axle 72 which biases mirror mount 68 to a default position for imaging item 24 (Fig. 6). Insertion of item 20 from item enclosure 48 overcomes the bias force of spring 74. Aperture 52 may be narrow enough to provide a friction fit of item 20, or an operator may be required to hold item 20 in position within item enclosure 48.

Removal of item 20 from item enclosure 48 releases the bias force of spring 74. In this position, mirror mount 68 is oriented at angle 82 of approximately 45 degrees clockwise from centerline 76.

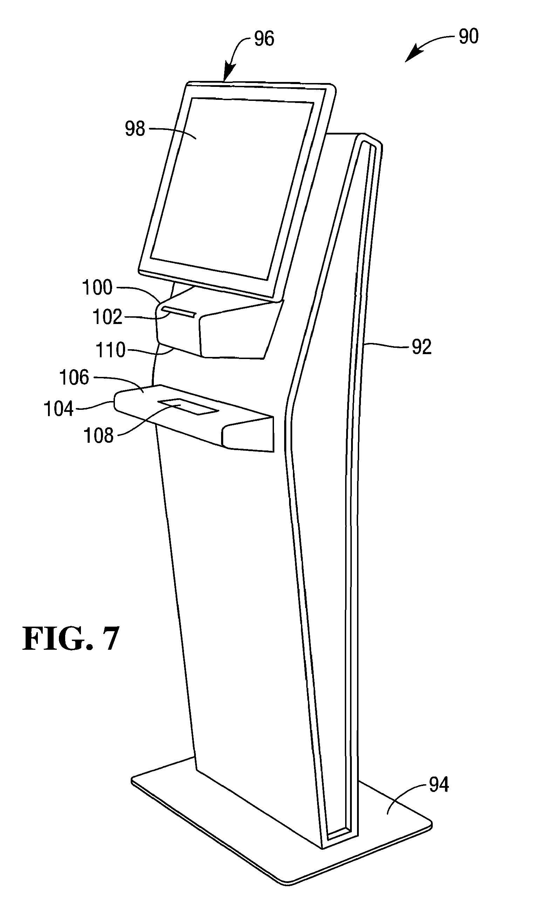

Positioning of item 24 may be unconstrained. For example, an operator may be required to properly position and orient item 24 to an optimal image capture distance and location. Alternatively, positioning may be fully or partially constrained. For example, a boarding pass may be printed with a high aspect ratio barcode label, such as UPC-128, or a two-dimensional barcode label, such as PDF 417, and an operator may be required to position item 24 on surface 98 (Fig. 7), which is located at a distance from window 18 (and camera 12) that provides sufficient field of view 78 for reading the barcode label.

While item 24 is in position, camera 12 senses motion of item 24 and initiates image capture. Alternatively, an operator may activate camera 12 to capture an image of item 24. Other types of activation methods are also envisioned, including a dedicated motion sensor for sensing motion of item 24.

Referring now to Fig. 7, an example travel kiosk 90 is illustrated.

Travel kiosk 90 includes housing 92, which may take the shape of a pedestal with foot 94. Other housing configurations and shapes are also envisioned.

Travel kiosk 90 includes computer 96 with integral touch screen 98 coupled to or integral with housing 92.

Travel kiosk 90 further includes imaging barcode reader housing 100 coupled to or integral with housing 92, which contains imaging barcode reader 10. Imaging barcode reader housing 100 extends from housing 92 over shelf 106. Imaging barcode reader housing 100 includes slot 102 for receiving a driver's license and bottom aperture 110 exposing window 18.

Travel kiosk 90 may further include shelf 104 coupled to or integral with housing 92. Shelf 104 positions boarding pass 108 at a proper distance from imaging barcode reader 10. A traveler places boarding pass 108 on top surface 106, centered beneath window 18.

Although particular reference has been made to certain embodiments, variations and modifications are also envisioned within the spirit and scope of the following claims.

## Claims

1. A barcode reader (10) comprising:
a housing (40) including a first aperture (16) and a second aperture (18);
a mirror assembly (14) moveable to first and second positions;
a camera (12) for capturing a first image of a first item (20) when the mirror assembly (14) is in the first position and the first item (20) is optically aligned with the first aperture (16), and for capturing a second image of a second item (24) when the mirror assembly (14) is in the second position and the second item (24) is optically aligned with the second aperture(18); and
a processor (36) for identifying and decoding a first barcode label (22) on the first item (20), and for identifying and decoding a second barcode label (26) on the second item (24).

2. The barcode reader of claim 1, further comprising an enclosure (48) for the first item (20) adjacent the first aperture (16).

3. The barcode reader of claim 2, wherein the enclosure (48) includes a slot for facilitating insertion of the first item (20) into the enclosure (48) and removal of the first item (20) from the enclosure (48).

4. The barcode reader of any preceding claim, wherein the mirror assembly (14) rotates between the first and second positions.

5. The barcode reader of claim 4, further comprising an axle (72) about which the mirror assembly (14) rotates.

6. The barcode reader of claim 5, further comprising a spring coupled to the axle (72) for biasing the mirror assembly (14) towards the second position.

7. The barcode reader of claim 1, wherein the mirror assembly (14) comprises:
a mirror mount (68) having first and second sides;
a first mirror (14a) on the first side of the mirror mount (68) facing a first direction; and
a second mirror (14b) on the second side of the mirror mount (68) facing a second direction;
wherein the camera (12) captures the first image using the first mirror (14a) and captures the second image using the second mirror (14b).

8. The barcode reader of any preceding claim, wherein the first item (20) comprises a driver's license.

9. The barcode reader of any preceding claim, wherein the second item (24) comprises a boarding pass.

10. A kiosk (90) comprising:
a barcode reader (10) including:
a housing (100) including a first aperture (16) and a second aperture (18), wherein the first aperture (16) faces a generally upwards direction and the second aperture (18) faces a generally downwards direction;
a mirror assembly (14) moveable to first and second positions;
a camera (12) for capturing a first image of a first item (20) when the mirror assembly (14) is in the first position and the first item (20) is optically aligned with the first aperture (16), and for capturing a second image of a second item (24) when the mirror assembly (14) is in the second position and the second item (24) is optically aligned with the second aperture (18);
a processor (36) for identifying and decoding a first barcode label (22) on the first item (20), and for identifying and decoding a second barcode label (26) on the second item (24);
an enclosure (102) for the first item (20) adjacent the first aperture (16), including a slot for facilitating insertion of the first item (20) into the enclosure (102) and removal of the first item (20) from the enclosure (102); and
a shelf (104) below the barcode reader (10) for supporting the second item (24) below the second aperture (18).
